# EUROPEAN PATENT SPECIFICATION

(11) **EP 2 752 461 B1**
(45) Date of publication and mention of the grant of the patent: **17.08.2022**
(21) Application number: 12828428.8
(22) Date of filing: 31.08.2012
(51) Int. Cl.: C08L 93/00, C08F 2/44, C08F 251/02, C08K 7/02, C08L 1/00, C08H 8/00, C08L 1/02, C08J 3/00, C08J 3/12, C09J 193/00, C08L 97/02

(54) **MATERIAL TO BE MOLDED, MANUFACTURING METHOD FOR SAME, AND COMPRESSION-MOLDED ARTICLE USING SAID MATERIAL TO BE MOLDED**
ZU FORMENDES MATERIAL, HERSTELLUNGSVERFAHREN DAFÜR UND FORMGEPRESSTER GEGENSTAND MIT DEM ZU FORMENDEN MATERIAL
MATIÈRE À MOULER, SON PROCÉDÉ DE FABRICATION, ET ARTICLE MOULÉ PAR COMPRESSION À L'AIDE DE LADITE MATIÈRE À MOULER

(30) Priority: 31.08.2011 JP 2011190197
(43) Date of publication of application: 09.07.2014
(73) Proprietor: Tokyo Metropolitan Industrial Technology Research Institute, Tokyo 135-0064 (JP); ELEMUS LLC, Okazaki-shi Aichi 444-0864 (JP)
(72) Inventor: KINOSHITA, Toshio, Tokyo 135-0064 (JP); KAMIYA, Yoshimi, Tokyo 135-0064 (JP); UENO, Hiroshi, Tokyo 135-0064 (JP); KAWARADA, Kensuke, Tokyo 135-0064 (JP); ARAKAWA, Hiroshi, Tokyo 105-0004 (JP); NAKAYAMA, Tetsuya, Tokyo 105-0004 (JP)
(74) Representative: Arends, William Gerrit
(86) International application number: PCT/JP2012/072214
(87) International publication number: WO 2013/031969

(56) References cited:
- JP-A- S58 104 947
- JP-A- 2005 089 538
- JP-A- 2006 008 887
- US-A- 2 615 855

## Description

### Technical Field

The present invention relates to a method for manufacturing a powdered molding material.

### Background Art

Lacquer (called "urushi" in Japanese) is the liquid resin which oozes out of lacquer trees. A major component thereof, urushiol (a catechol derivative), is cured through oxidative polymerization at room temperature (15-25°C) / high humidity (65-85%RH) with the effect of a slight amount of enzyme (laccase) included in the lacquer. While lacquer in lacquer trees growing in an area such as Japan and China includes the above-mentioned urushiol as its major component, lacquer in lacquer trees growing in an area such as Taiwan and Vietnam, etc., includes laccol as its major component, and lacquer in lacquer trees growing in an area such as Thailand and Myanmar, etc., includes thitsiol as its major component. Such laccol and thitsiol are also cured through oxidative polymerization in the same way as urushiol. In lacquerware, i.e., lacquer-coated articles, a lacquer coating formed by such curing on the surface of the base material, which is typically made of wood, protects the base and provides color tone with a unique depth, so that lacquerware can be used for tableware, equipment such as furniture and fixtures, and craftwork, etc.

However, the process for manufacturing a lacquer-coated article requires many steps, including base treatment of a wooden base as a base material, a base coating, intermediate coating and top coating, as well as time for drying. A high level of skill is necessary for such operation and the raw material lacquer itself is expensive. Further, when processing wood used as a base material of lacquerware for the production of, for example, tableware, such processing of wood is not necessarily suited for mass production and this limits the production scale of lacquerware and the applications thereof. Furthermore, the lacquer coating operation can cause skin disorders (lacquer rash) for the workers due to their allergic reaction to urushiol.

Meanwhile, petroleum-based synthetic materials suitable for compression molding processing, such as phenol resins, urea resins and polycarbonates, etc., have been used in recent years as base materials for ordinary mass-produced tableware. However, some of these materials are suspected of releasing components which are toxic to human bodies or causing the elution of endocrine-disrupting chemicals, and their use has become a social issue.

Thus, it is still considered desirable to use lacquer, wood and other plant fiber materials, i.e., natural resources, as the base materials for tableware, etc. Developing processing technology that allows for the mass-production of articles having an almost equal appearance and quality to those of conventional lacquerware articles even when using natural resources for a molding material is considered as being an effective way to expand the applications of lacquer and develop related industries.

For molding materials obtained using only natural resources as raw materials, for example, Patent Document 1 describes a molding material and a molded article proposed by the present inventors, the molding material and molded article enabling mass-production thereof and being stable and manageable even if only natural resources, such as lacquer and plant fibers, are used as raw materials without using any petroleum-derived chemical substances.

Patent Document 2 describes containers made by applying a surface treatment with natural lacquer to the surface of a wooden base which is prepared by molding a mixture of wood powder and a polylactic acid-based resin.

Patent Document 3 relates to lacquerware having a wood powder-containing coating film layer, and describes a method wherein the color of a coloring lacquer coating film M1 of a first layer to be applied first to the surface of a basis and the color of a coloring lacquer coating film M2 of a second layer to be applied subsequently are allowed to be seen at the same time in a spotted pattern, so as to create a feeling of novel quality to the eyes and improve texture and temperature transfer characteristics.

Patent Document 4 describes biodegradable plastic which is constructed by mixing the main material produced by breaking a 100% natural material, such as plant fibers, into pieces with a binder made of a 100% natural material, such as lacquer, through water, and drying and solidifying the mixture into a predetermined form.

### Prior Art References

### Patent Documents

Patent Document 1: JP3779290 B
Patent Document 2: JP2004-276463 A
Patent Document 3: JP2005-007680 A
Patent Document 4: JP2005-023262 A

### Summary of the Invention

### Problem to be Solved by the Invention

As already described above, currently, the development of organic molding materials that do not use petroleum, which is an underground resource that will be depleted some time in the future, is an issue facing humankind at large. Further, some forms of equipment made of plastic have problems of elution of formaldehyde or endocrine-disrupting chemicals which are harmful to the human body and the influences of such chemical substances on the human body have become social problems.

In response to the above problems, as described in Patent Document 1 mentioned above, the present inventors have already developed a molding material and a molded article obtained using only natural resources, such as lacquer and plant fibers, as raw materials without using any petroleum-derived chemical substances.

However, the above molding material obtained using only natural resources as raw materials needs a pulverizing step to make the molding material in a powdered form having a particle size and a particle size distribution appropriate for materials to be used to form molded articles. Thus, further simplifying the manufacturing process is desirable.

An object of the present invention is to provide a method for manufacturing a powdered molding material having a favorable particle size as an industrial material more efficiently and stably, even if the molding material is made using only natural resources (biomass), such as lacquer and plant fibers as described above, as raw materials.

### Means for Solving the Problem

In view of the above-described problems, the present inventors carried out intensive studies and, as a result, have found that a powdered molding material having a favorable particle size can be obtained more efficiently by mixing lacquer and plant fibers with a specific kneading method, thereby completing the present invention.

Namely, the present invention provides method for manufacturing a powdered molding material obtained by three-dimensionally kneading, while heating, lacquer and plant fibers, as defined in the claims.

### Effect of the Invention

According to the present invention, even for a molding material obtained using only natural resources, such as lacquer and plant fibers, as raw materials, a powdered molding material having a favorable particle size can be obtained even more efficiently. In addition, according to the present invention, a compression-molded article obtained from such powdered molding material, in particular, having excellent flexural strength, can be obtained.

### Brief Description of the Drawings

Fig. 1 is a plotted chart showing an example of the relationship between an acetone-soluble matter and power supplied to drive rotating blades for use in kneading lacquer and plant fibers.
Fig. 2 is a picture showing examples of the molded article according to the present embodiment.
Fig. 3 is a schematic view showing an example of an apparatus for kneading lacquer and plant fibers.
Fig. 4 is a chart showing the results of flexural strength of compression-molded articles obtained in the Examples.

### Mode for Carrying out the Invention

### «Molding Material»

The molding material obtained with the method according to the invention is a powdered molding material obtained by three-dimensionally kneading, while heating, lacquer and plant fibers.

The present inventors have already proposed, in Patent Document 1, kneading lacquer and plant fibers and thereby providing a molding material and a molded article using only natural resources as raw materials. In a kneaded mixture of lacquer and plant fibers, however, lacquer is usually likely to aggregate and form lumps due to its inherent viscosity without fully polymerizing with plant fibers. Thus, a step of pulverizing such lumps in the kneaded mixture is performed.

In contrast, since a three-dimensional kneading method, in which three-dimensional movements (which can also be called steric movements) are dominant in the movements of the mixture due to kneading, is adopted in the present embodiment, the resulting mixture of lacquer and plant fibers constitutes a powder having a particle size suitable for a molding material, and thus, no pulverizing step is required.

Specifically, the wording "(to) knead three-dimensionally" used in the present embodiment means not a kneading wherein two-dimensional, or planar, movements of the mixture are dominant, but a kneading wherein movements in multiple directions, including vertical, horizontal and oblique directions, (i.e., steric movements) are dominant. Examples of a mixing machine that enable such three-dimensional kneading include a fluid-type mixing machine (a Henschel mixer), a high-speed fluid-type mixer, and a Schugi mixer. By kneading a mixture of lacquer and plant fibers three-dimensionally, a molding material in a powdered form having a suitable particle size can be obtained without a pulverizing step. The major reason for this is thought to be as follows: when the mixture is kneaded three-dimensionally, strong convection, dispersion and shearing/mixing effects are applied to the kneaded mixture, which breaks, binds, or rounds the kneaded mixture to form powder having a suitable particle size. However, the reasons for this are not limited to the above.

The mixing machine (for example, a fluid-type mixing machine) used in the present embodiment preferably has a mixing tank with a jacketed structure and is preferably configured such that high-temperature oil or steam circulates inside the jacket. With this configuration, the mixture can be not only kneaded three-dimensionally but also heated from the side of the mixing tank, and advantageous effects can be obtained in the formation of powder having a suitable particle size.

It is preferable that lacquer and plant fibers are three-dimensionally kneaded using one or more rotating blades provided in a mixing machine. Due to the effects (convection, dispersion, and shearing/mixing) caused by the rotation of the rotating blades, a powdered molding material having a favorable particle size can be obtained more efficiently. More preferably, the mixing machine has two or more rotating blades. The mixing machine having two or more rotating blades can further ensure the three-dimensional kneading of the mixture, which accordingly further ensures that a powdered molding material having a favorable particle size can be obtained. From the same viewpoint as above, it is even more preferable for the two or more rotating blades to be arranged to have the same rotation axis. Examples of such mixing machines include a fluid-type mixing machine (a Henschel mixer; e.g., a Mitsui FM mixer manufactured by Mitsui Mining Co., Ltd.), a high-speed fluid-type mixer (e.g., a mixing machine manufactured by KAWATA MFG Co., Ltd.) and a Schugi mixer (e.g., a vertical mixer manufactured by Kanto Kongoki Industrial Co., Ltd.).

The rotation speed of the rotating blades may be changed as appropriate depending on the type and scale of the mixing machine in which the blades are provided. The rotation speed is not particularly limited and may be set to, for example, 100 rpm to 1000 rpm. A powdered molding material having a favorable particle size can be obtained by three-dimensional kneading of lacquer and plant fibers. The reason for this is thought to be that the convection and dispersion effects brought about by the rotating blades can be obtained in a sufficient manner and the flow resistance of the kneaded mixture can be suppressed. However, the reason therefor is not limited to the above.

It is preferable that kneading is performed at a heating temperature in a range from 90°C to 180°C, and more preferably at a heating temperature in a range from 120°C to 160°C. If the heating temperature is within the above range, polymerizable monomers in the lacquer component properly cause thermal polymerization, resulting in a molding material of high quality.

The kneading time depends on the above-mentioned heating temperature, etc., and it is preferable for the kneading time to be set as appropriate within the range of 30-120 minutes.

It is preferable for the molding material to be obtained by measuring the power supplied to drive the rotating blades and stopping kneading according to a change with time of such power value. This further ensures that a suitable molding material having a favorable particle size can be obtained. The following is a detailed explanation thereof.

When three-dimensionally kneading, while heating, lacquer and plant fibers in a mixing machine having rotating blades, the value of power supplied to drive the rotating blades changes as the fluidity (and, therefore, the viscosity) of the mixture of lacquer and plant fibers in the mixing machine changes. By watching a change with time of such power value, a point in time when the mixture of lacquer and plant fibers is in a suitably powdered form, in other words, a point in time to stop kneading, can be determined.

An example of such change with time of the power value will be described below. Firstly, when lacquer is gradually provided into the mixing machine which contains only plant fibers therein, the lacquer starts to mix with the plant fibers and this reduces the fluidity (increases the viscosity) of the mixture, so that the power value increases. When the mixing of the lacquer with the plant fibers has finished, the fluidity of the mixture increases (the viscosity decreases) and the power value decreases. This is thought to be due to the evaporation of water contained in the lacquer and the increase in the temperature in the mixing machine. After that, when the polymerization of the polymerizable monomers, e.g., urushiol, in the lacquer component proceeds by way of heating and the molecular weight of the resulting polymer increases, the fluidity of the mixture decreases (the viscosity increases) and the power value increases. When kneading is further continued, the fluidity of the mixture again starts increasing (the viscosity starts decreasing) and the power value starts decreasing at a certain point in time (maximum point). This maximum point appears to be the point in time when the mixture of the lacquer and plant fibers forms a powder. The fluidity of the mixture thereafter increases (the viscosity decreases) and the power value continues decreasing. It is preferable to set a point in time to stop kneading at some time after the maximum point.

The molding material thus obtained includes 10.5-13% by mass, of acetone-soluble matter. Acetone-soluble matter has been considered to serve as an indicator for polymerizable monomers, such as urushiol, etc. (see, for example, JP3779290B). The present inventors have now clarified that the polymerizable monomers decrease due to the thermal polymerization thereof and that polymers, in turn, increase, thereby reducing the acetone-soluble matter. In other words, the present inventors have clarified the relationship of such acetone-soluble matter with the productivity of the molding material of the present embodiment, and, by referring to such relationship, the present inventors have enabled the molding material of the present embodiment to be produced efficiently. By using a molding material which includes acetone-soluble matter within the above-mentioned range, a molded article with much better flexural strength can be stably obtained.

The acetone-soluble matter can be measured by a method which will be described later in the Examples.

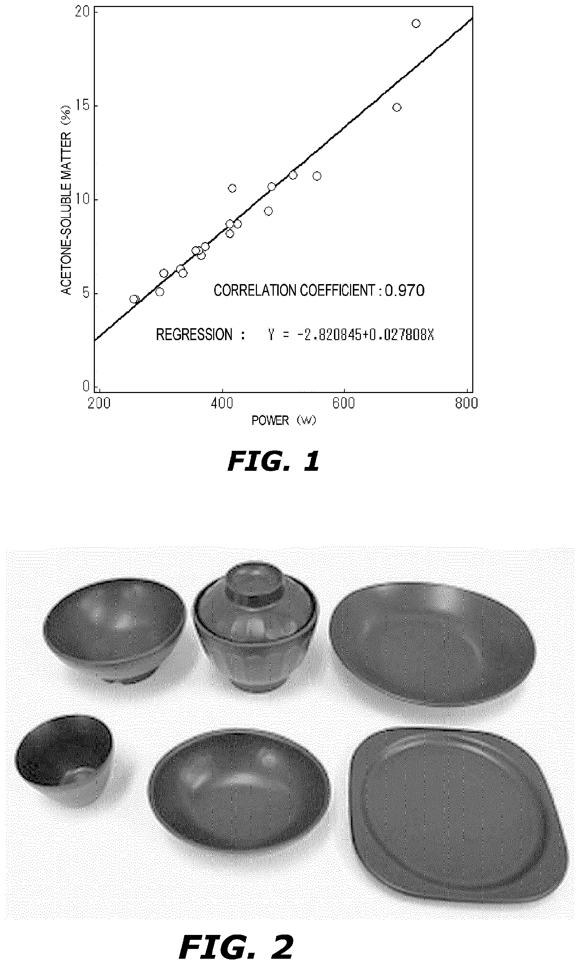

The value of power supplied to drive the rotating blades is considered to have a correlation with the acetone-soluble matter in the resulting molding material. For example, it appears that, with regard to same lot raw lacquer from each country, there is a correlation which can be represented by a linear regression. Fig. 1 shows an example of the relationship (plotted chart) between the power supplied to drive the rotating blades and the acetone-soluble matter when a molding material was manufactured from lacquer and plant fibers using a fluid-type mixing machine. It can be found from Fig. 1 that the correlation thereof has a correlation coefficient of 0.970, which indicates a very favorable correlation.

Thus, a molding material having a suitable range of acetone-soluble matter can be stably obtained by controlling the power value supplied to drive the rotating blades in the manufacture of the molding material.

The particle size of the powder is more favorable (suitable) if a larger percentage of the powder has almost the same diameter. This is based on the viewpoint of preventing, when filling a mold with a powdered molding material in order to mold such material, excessive entry of the powdered molding material into a space of the mold which should not be filled with the molding material (for example, a space formed between respective mold members if the mold has such several mold members). For example, the molding material is a powder that passes through a 10-120 mesh sieve. The molding material including a powder that passes through a 10-120 mesh sieve shows favorable moldability, in other words, the molding material can be prevented from entering a space of the mold. Thus, the molding material as such is suitable for use as a material for forming a compression-molded article, which will be described later.

The molding is preferably a powdered molding material which includes: a polymer of one or more monomers selected from the group consisting of urushiol, laccol and thitsiol; and plant fibers, and which includes a powder that passes through a 10-120 mesh sieve. The molding material more preferably includes a powder that passes through a 60-100 mesh sieve. Such molding material has a favorable particle size, so that excessive entry into a space of the mold can be more sufficiently suppressed. It is to be noted that the entry of a proper amount of molding material into a space will result in some burrs being formed, thereby resulting in appropriate degassing effects, and is thus favorable. A molding material as such can be obtained by, for example, the above-described manufacturing method.

Examples of the plant fibers used in the present embodiment include wood fiber, such as cellulose of ordinary tree species, including *sugi* (Japanese cedar), *hinoki* (Japanese cypress), *tsuga* (Japanese hemlock), empress, pine and spruce trees. Other than wooden base materials, materials containing bamboo, reed, cotton or other plant-based fibers may also be used. The suitable particle size of the plant fiber powder is 10-120 mesh. If plant fibers are broken into pieces by, for example, a mill, the fibers are fibrillated and lacquer can easily penetrate into such fibrillated fibers during kneading so that a homogenous mixture of lacquer and plant fibers can be obtained.

Examples of the lacquer used in the present embodiment include lacquer containing one or more monomers selected from the group consisting of urushiol, laccol and thitsiol, and/or a polymer thereof.

The mixing ratio between the lacquer and plant fibers is preferably 1:9 to 6:4 and more preferably 4:6 to 6:4 by weight. If the mixing ratio between the lacquer and plant fibers is within the above range, a powdered molding material having a suitable particle size is likely to be obtained and a molded article obtained by compression-molding such molding material is likely to have excellent flexural strength.

In the present embodiment, lacquer and plant fibers may be provided into a mixing machine before the above-described three-dimensional kneading. Lacquer and plant fibers may be provided into the mixing machine at the same time, or separately. Preferably, plant fibers are provided into the mixing machine first with lacquer being provided next. By first providing plant fibers into the mixing machine, a powdered molding material having a suitable particle size is likely to be obtained.

When providing plant fibers first into the mixing machine, it is preferable to preliminarily knead the plant fibers three-dimensionally while heating them. The heating temperature in the preliminary kneading is preferably 50-90°C and more preferably 60-80°C. Further, if the mixing machine has rotating blades, it is preferable that the rotation speed of the rotating blades in the preliminary kneading is lower than the rotation speed of the rotating blades in the above-described kneading step.

When providing plant fibers first and lacquer next into the mixing machine and manufacturing a molding material under the above-described conditions, a powdered molding material having a more suitable particle size and excellent moldability is likely to be obtained and a molded article obtained by compression-molding such molding material is likely to have excellent flexural strength.

The molding material is a powdered molding material that has a favorable particle size, despite the molding material being made using only natural resources, such as lacquer and plant fibers, as raw materials. Such molding material, not only that obtained by using lacquer having urushiol as its major component, but also that obtained by using lacquer having laccol or thitsiol as its major component, can be compression-molded as a raw material to obtain a molded article.

### «Method for Manufacturing Molding Material»

The method for manufacturing the powdered molding material not particularly limited, as long as it includes the step of three-dimensionally kneading, while heating, lacquer and plant fibers as defined in the claims.

According to said manufacturing method, a powdered molding material having a suitable particle size and excellent moldability can be obtained without performing a pulverizing step, and without going through a lumpy state.

In other words, according to said manufacturing method, a powdered molding material having a favorable particle size can be efficiently obtained even when using only natural resources, such as lacquer and plant fibers, as raw materials. Further, such molding material obtained by said manufacturing method, not only that obtained by using lacquer having urushiol as its major component, but also that obtained by using lacquer having laccol or thitsiol as its major component, can be used to obtain a molded article.

In said method for manufacturing the powdered molding material, it is preferable for the lacquer and plant fibers to be kneaded three-dimensionally with one or more rotating blades provided in a mixing machine.

It is also preferable for said method for manufacturing the powdered molding material to further include the steps of: measuring the power supplied to drive the rotating blades; recording the value of the power; and stopping the kneading according to a change with time of the recorded value of the power.

The mixing machine and the various conditions, etc., used in said method for manufacturing the powdered molding material are almost the same as those described in <<Molding Material» above.

An apparatus for manufacturing the powdered molding material preferably includes: a mixing machine comprising a vessel for receiving lacquer and plant fibers therein and one or more rotating blades provided in the vessel, to three-dimensionally knead, while heating, lacquer and plant fibers; a power meter that measures power supplied to drive the rotating blade; and a controller that controls a rotation speed of the rotating blade based on the value of the power. With the above manufacturing apparatus, a powdered molding material having a suitable particle size and excellent moldability can be obtained stably and efficiently, as has already been described above. The controller calculates a suitable rotation speed of the rotating blades based on the obtained power value and controls the rotation speed manually or automatically according to the calculation. In the above manufacturing apparatus, the mixing machine is not particularly limited, as long as it has a vessel and rotating blades as described above, and it may be a known type. Further, the power meter and data logger are not particularly limited, as long as they are connected to each other and also to the mixing machine so that they can measure power supplied to drive the rotating blades and record the value of the power, and each may be a known type. Still further, the controller is not particularly limited, as long as it can control the rotation speed of the rotating blades, and it may be a known type.

In the apparatus for manufacturing the powdered molding material , rotation speed of the rotating blades can be changed as appropriate depending on the type and scale of the apparatus. The rotation speed is not particularly limited but, for example, it is preferable for the kneading to be stopped according to a change with time of the recorded power value. It is also preferable for the heating temperature to be in a range from 90°C to 180°C. Further, the apparatus for manufacturing the powdered molding material is an apparatus for manufacturing a powdered molding material including a powder passing through a 10-120 mesh sieve, and is also preferably an apparatus for manufacturing a powdered molding material by measuring the value of power for driving the rotating blades and thereby adjusting acetone-soluble matter.

### «Compression-Molded Article»

A compression-molded article is obtained by compression-molding the above-described molding material by applying a pressure of preferably 10-70 MPa. Compression-molded articles obtained as such, not only in the case where lacquer having urushiol as its major component is used but also in the case where lacquer having laccol or thitsiol as its major component is used, can be suitably used for various applications. For example, if wood fibers are used as plant fibers, the compression-molded article of the present embodiment has a wood material feeling and can be used as is for, by way of example, equipment and various kinds of industrial materials. However, for applications that require a beautiful appearance and improved water resistance, it is preferable to further apply a lacquer coating on the surface thereof. In that case, since the above-described molding material, acting as a raw material of the molded article, has lacquer as its major component, a lacquer coating fits quite well with the compound material and various base processes performed in the conventional coating processing can be omitted.

Furthermore, if final heating treatment is carried out for the molded article obtained as above, the lacquer coating film is completely cured so as to improve contact with the base. Further, the active groups in, for example, urushiol, laccol or thitsiol disappear so that it appears that there is almost no risk of lacquer rash for the user. The obtained molded article is sufficient for practical use, such as for tableware.

When using, for example, a high-speed fluid-type mixer manufactured by KAWATA MFG Co., Ltd., for the mixing machine, three-dimensional kneading can be achieved by causing streaming movement by the rotation of the rotating blades and also by performing agitation while vibrating the mixing vessel. Accordingly, even when using such a mixing machine, it is still possible to obtain a powdered molding material having a favorable particle size by using only natural resources (biomass), such as lacquer and plant fibers, as raw materials. In addition, such molding material, not only that obtained using lacquer having urushiol as its major component, but also that obtained using lacquer having laccol or thitsiol as its major component, can be used as a raw material to obtain a molded article. Fig. 2 shows tableware, such as plates and various types of bowls, as examples of the molded article.

### Examples

Hereinafter, the present invention will be specifically described according to Examples; however, the present invention is not limited by these Examples. The following components were used in the Examples and Comparative Examples.

### 1) Lacquer

Lacquer type: Chinese raw lacquer

Lacquer composition: 75.6% by mass of urushiol, 13.5% by mass of water, 9.0% by mass of nitrogen-containing matter and 1.9% by mass of gum

The lacquer composition was determined in accordance with the method of analyzing lacquer liquid compositions (prepared by the Coating Engineering Subcommittee of the Joint Committee on Material and Chemical Engineering).

### 2) Plant Fibers

Plant fiber type: *Sugi* (Japanese cedar) wood powder (100% made from forest thinnings produced by Tonami Forestry Cooperative in Toyama Prefecture, product passing 100 mesh size)
(i) Particle size: more than 330 mesh - 19.7% by mass, 330-200 mesh - 22.6% by mass, 200-150 mesh - 25.4% by mass, 150-100 mesh - 25.9% by mass, 100-80 mesh - 5.6% by mass, and less than 80 mesh - 0.8% by mass
(ii) Water content: 7.0% by mass
(iii) Bulk specific gravity: 1000 cm³/180g

The values shown in (i) to (iii) above are based on data from Tonami Forestry Cooperative.

### (Measurement Methods for Various Properties)

### <Acetone-soluble Matter>

The acetone-soluble matter (% by mass) in the molding material was measured in the following manner.

1 g of molding material was placed in a glass container with 25 ml of acetone therein and left overnight. After that, filtration was performed and the remaining substance was further mixed with 25 ml of acetone and left for two hours. Filtration was performed thereafter. The substance dissolved in the acetone after the two filtrations was left as is for five days in order to remove volatile components. After removing the volatile components, the weight of the substance dissolved in the acetone was measured and the acetone-soluble matter (% by mass) in the molding material was calculated from the above measured value and the initial weight (1 g) of the molding material.

### <Particle Size Distribution>

The molding material was sorted using a vibrating sieving machine (Sato's method vibrating sieving machine CB40-3SH, manufactured by Koei Sangyo Co., Ltd.) to measure a particle size distribution and determine the yield of powder of less than 60 mesh in the molding material.

### <Flexural Strength and Flexural Modulus >

A sample piece (having a width of 10±1 mm, a thickness of 4.0±0.2 mm and a length of 80 mm or more) was prepared using the compression-molded article and its flexural strength (MPa) and flexural modulus (GPa) were determined in accordance with the plastic flexural property testing method of JIS K7171-1994. The test was performed three times and the average value found in the three tests was regarded as the flexural strength (MPa) and flexural modulus (GPa) of the compression-molded article. In the above test, the distance between the supports was 70 mm and the cross-head speed was 5 mm/min. Autograph AG-10TD, manufactured by Shimadzu Corporation, was used for the measurement apparatus.

### [Example 1]

### (Manufacture of Molding Material)

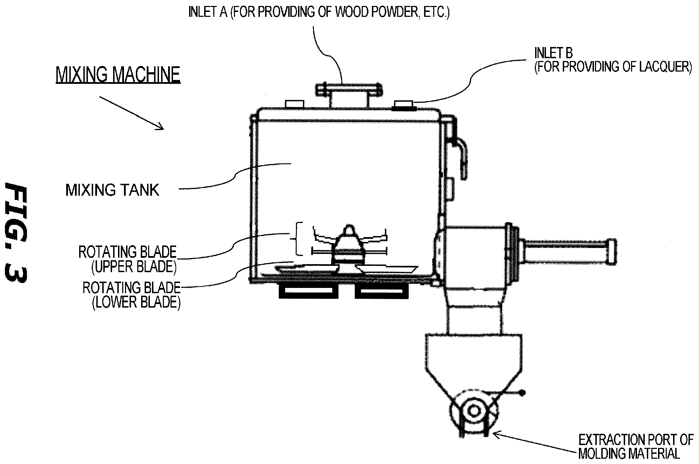

Using a fluid-type mixing apparatus (Mitsui FM20C/I, manufactured by Mitsui Mining Co., Ltd.), a molding material was manufactured as follows. The mixing apparatus was as schematically shown in Fig. 3 and it included: a mixing machine having a vessel (a mixing tank having a volume of 20 L) for receiving lacquer and plant fibers therein and two rotating blades provided within the vessel to have the same rotation axis (type of blades: CK for upper blade and AO for lower blade; size of rotating blades: ϕ 27 cm (upper side) and ϕ 26 cm (lower side)); a power meter (clamp power meter) for measuring the power supplied to drive the rotating blades; and a controller for controlling the rotation speed of the rotating blades based on the power value.

1 kg of plant fibers was provided into the vessel in the mixing machine and the lid of the vessel was closed. The two rotating blades provided within the vessel were both rotated at a speed of 200 rpm to knead the plant fibers three-dimensionally while gradually providing 1 kg of lacquer into the vessel for 2-15 minutes. Then, the rotation speed of each of the two rotating blades was increased to 600 rpm so as to three-dimensionally knead the mixture of the lacquer and the plant fibers within the mixing machine while heating the mixture at 130°C.

During the kneading, the power supplied to drive the rotating blades was measured and the measured power value was recorded. After the point in time when the mixture of the lacquer and the plant fibers was determined as having formed into a powder and become an appropriate molding material based on changes with time of the recorded power value, kneading continued to be performed for some time. Then, the rotation of the rotating blades and the heating inside the mixing machine were stopped, thereby stopping the kneading of the lacquer and plant fibers. The kneading time of the lacquer and plant fibers was 54 minutes. The obtained molding material was taken out from a discharge port of the mixing machine and cooled immediately.

The acetone-soluble matter in the obtained molding material was measured and found to be 13.05% by mass. Further, the obtained molding material was a powder including a polymer of urushiol (confirmed by a decrease in the amount of acetone-soluble matter) and plant fibers.

### (Manufacture of Compression-molded Article)

A compression-molded article was manufactured using the above-obtained molding material, as follows.

The molding method employed was a compression molding method. The mold used was a planar molding mold prepared as a sample. The molding machine used was a 200 t pressing machine for compression molding.

Of the above-obtained molding material, 114 g of powder that passed through a 60 mesh sieve was placed in the mold, and the surface temperature of the mold was set to 145°C. Then, a pressing operation and a degassing operation were alternately repeated so that molding was performed with a maximum pressure of 62.3 MPa. After that, the mold was degassed to take out the molded article from the mold. The obtained compression-molded article was dried in a hot air drying furnace (150°C) for three hours.

Although not shown in the drawings, when using, for example, a *sake* cup mold for the molding of a *sake* cup, etc., good moldability can be obtained if the maximum pressure is set at about 12.75 MPa.

Two or three types of molding materials and compression-molded articles different from the above were obtained in the same manner as above except that the kneading time was changed as shown in Table 1. The acetone-soluble matter and the yield of powder of less than 60 mesh in the molding material, as well as the flexural strength of the compression-molded article, are shown in Table 1.

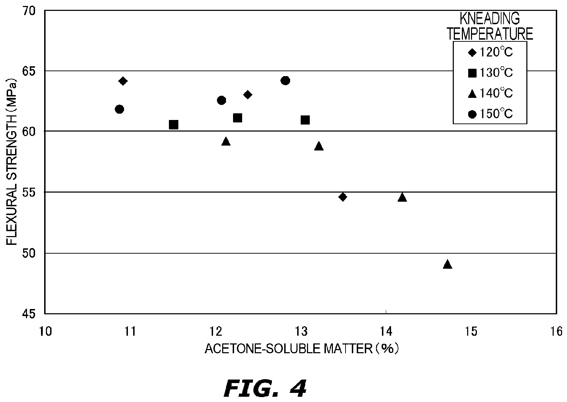

The flexural strength (MPa) of the obtained compression-molded article was measured. The measurement results are shown in Fig. 4.

### [Examples 2 to 4]

A molding material was manufactured in the same manner as in Example 1 except that the kneading conditions (kneading temperature and kneading time) of the lacquer and plant fibers were changed as shown in Table 1, and the acetone-soluble matter and the yield of powder of less than 60 mesh in the obtained molding material were measured. The measurement results are shown in Table 1. Further, a compression-molded article was manufactured in the same manner as in Example 1 except that the above obtained molding material was used, and the flexural strength (MPa) of the obtained compression-molded article was measured. The measurement results are shown in Table 1.

### [Reference Example 1]

### (Manufacture of Molding Material)

Plant fibers and lacquer were mixed at a ratio of 1:1 and kneaded using an automatic mortar (product name: Auto Mortar ANM1000 Type, manufactured by Nitto Kagaku Co., Ltd.) (kneading condition: about 20 minutes), and heated (heating treatment in a hot air drying furnace at 120°C for 90 minutes while agitation was performed at 5-10 minute intervals) to manufacture a molding material. The obtained molding material was not able to be used as is for a material for forming a compression-molded article because the plant fibers aggregated with each other and formed lumps due to the viscosity of the lacquer.

**Table 1**

| Example No. | Kneading temperature of lacquer and plant fibers (°C) | Kneading time of lacquer and plant fibers | Acetone-soluble matter (% by mass) | Yield of power less than 60 mesh (% by mass) | Flexural strength (MPa) |
|---|---|---|---|---|---|
| 1 | 130 °C | 54 min | 13.05 | 87.3 | 60.96 |
| | | 54 min 20 sec | 12.26 | 87.2 | 61.13 |
| | | 54 min 50 sec | 11.51 | 86.8 | 60.58 |
| 2 | 120°C | 65 min | 13.49 | 79.3 | 54.63 |
| | | 73 min | 12.38 | 80.8 | 63.05 |
| | | 81 min 50 sec | 10.91 | 80.9 | 64.17 |
| 3 | 140°C | 36 min 10sec | 14.72 | 85.9 | 49.12 |
| | | 37 min 40 sec | 14.19 | 86.6 | 54.62 |
| | | 39 min 50 sec | 13.21 | 86.8 | 58.83 |
| | | 41 min 30 sec | 12.12 | 85.8 | 59.21 |
| 4 | 150°C | 32 min 20 sec | 12.82 | 81 | 64.21 |
| | | 34 min 50 sec | 12.07 | 86.5 | 62.58 |
| | | 36 min 20 sec | 10.87 | 80.8 | 61.84 |

### Industrial Applicability

The molding material obtained using the method of manufacturing according to the invention is used as a suitable material for mass-production of molded products made of lacquer and plant fibers as base materials. The molded products obtained using the above molding material can be used as is and also as a base to which a lacquer coating can be easily applied. This molding material is particularly useful as a material for making tableware.

## Claims

1. A method for manufacturing a powdered molding material, comprising a step of three-dimensionally kneading, while heating, lacquer and plant fibers,
wherein the powdered molding material comprises 10.5 - 13% by mass of acetone-soluble matter, wherein the mass % of acetone-soluble matter is measured by placing 1 g of the molding material with 25 ml of acetone and leaving overnight; filtration is then performed and the remaining substance is further mixed with 25 ml of acetone and left for two hours; filtration is then performed; the substance dissolved in the acetone after the two filtrations is left for five days in order to remove volatile components; the weight of the substance dissolved in the acetone is then measured and the mass % of acetone-soluble matter is calculated;
wherein the powdered molding material comprises a powder that passes through a 10-120 mesh sieve, and
wherein the lacquer and the plant fibers are three-dimensionally kneaded using one or more rotating blades provided in a mixing machine, wherein three-dimensionally kneading comprises movements in multiple directions, including vertical, horizontal and oblique directions.

2. The manufacturing method according to claim 1, further comprising the steps of: measuring power supplied to drive the rotating blade; recording a value of the power; and stopping kneading according to a change with time of the recorded value of the power.

3. The manufacturing method according to claim 1 or claim 2, wherein a heating temperature is in a range from 90°C to 180°C.

## Patentansprüche

1. Verfahren zur Herstellung eines pulverförmigen Formmaterials, umfassend einen Schritt des dreidimensionalen Knetens von Lack und Pflanzenfasern unter Erhitzen,
wobei das pulverförmige Formmaterial 10,5- 13% Massenanteil acetonlöslicher Substanz umfasst, wobei der Massenanteil acetonlöslicher Substanz gemessen wird, indem man 1 g der Formmasse mit 25 ml Aceton versetzt und über Nacht stehen lässt; dann wird eine Filtration durchgeführt und die verbleibende Substanz weiter mit 25 ml Aceton vermischt und zwei Stunden stehengelassen; dann wird eine Filtration durchgeführt; die nach den beiden Filtrationen in Aceton gelöste Substanz wird fünf Tage stehengelassen, um flüchtige Bestandteile zu entfernen; dann wird das Gewicht der im Aceton gelösten Substanz gemessen und der Massenanteil des acetonlöslichen Materials berechnet;
wobei das pulverförmige Formmaterial ein Pulver umfasst, das durch ein 10-120 Maschensieb passt, und
wobei der Lack und die Pflanzenfasern unter Verwendung einer oder mehrerer rotierender Klingen, die in einer Mischmaschine bereitgestellt sind, dreidimensional geknetet werden, wobei das dreidimensionale Kneten Bewegungen in mehreren Richtungen umfasst, einschließlich vertikaler, horizontaler und schräger Richtungen.

2. Herstellungsverfahren nach Anspruch 1, ferner umfassend die folgenden Schritte: Messen der zum Antreiben der rotierenden Klinge zugeführten Leistung; Aufzeichnen eines Leistungswerts; und Anhalten des Knetens gemäß einer zeitlichen Änderung des aufgezeichneten Leistungswerts.

3. Herstellungsverfahren nach Anspruch 1 oder Anspruch 2, wobei eine Erwärmungstemperatur in einem Bereich von 90 °C bis 180 °C liegt.

## Revendications

1. Procédé de fabrication d'un matériau de moulage en poudre, comprenant une étape de malaxage tridimensionnel de laque et de fibres végétales tout en les chauffant,
dans lequel le matériau de moulage en poudre comprend 10,5 à 13 % en masse de matière soluble dans de l'acétone, dans lequel le pourcentage en masse de matière soluble dans de l'acétone est mesurée en plaçant 1 g du matériau de moulage avec 25 ml d'acétone et en laissant reposer une nuit ; une filtration est alors réalisée et la substance restante est mélangée en outre avec 25 ml d'acétone et laissée à reposer pendant deux heures ; une filtration est alors réalisée ; la substance dissoute dans l'acétone après les deux filtrations est laissée à reposer pendant cinq jours pour éliminer les composants volatils ; le poids de la substance dissoute dans l'acétone est alors mesuré et le pourcentage en masse de matière soluble dans de l'acétone est calculé ;
dans lequel le matériau de moulage en poudre comprend une poudre qui passe à travers un tamis à mailles de taille 10-120 ; et
dans lequel la laque et les fibres végétales sont malaxées de manière tridimensionnelle à l'aide d'une ou plusieurs lames rotatives prévues dans une machine de mélange, dans lequel le malaxage tridimensionnel comprend des mouvements dans plusieurs directions, y compris des directions verticales, horizontales et obliques.

2. Procédé de fabrication selon la revendication 1, comprenant en outre les étapes consistant à : mesurer la puissance fournie pour entraîner la lame rotative ; enregistrer une valeur de la puissance ; et interrompre le malaxage en fonction d'une variation avec le temps de la valeur enregistrée de la puissance

3. Procédé de fabrication selon la revendication 1 ou la revendication 2, dans lequel une température de chauffe est comprise dans la plage de 90 °C à 180 °C.
